# EUROPÄISCHE PATENTSCHRIFT

(11) **EP 1 764 211 B1**
(45) Veröffentlichungstag und Bekanntmachung des Hinweises auf die Patenterteilung: **16.03.2011**
(21) Anmeldenummer: 05020191.2
(22) Anmeldetag: 16.09.2005
(51) Int. Cl.: B32B 1/08, B32B 25/08, F16L 11/08

(54) **Schlauch**
Hose
Tuyau flexible

(43) Veröffentlichungstag der Anmeldung: 21.03.2007
(73) Patentinhaber: ContiTech Schlauch GmbH, 30165 Hannover (DE)
(72) Erfinder: Besche, Anton, 34497 Korbach (DE); Kuhn, Hans-Jürgen, 34477 Twistetal (DE)
(74) Vertreter: Finger, Karsten

(56) Entgegenhaltungen:
- EP-A- 1 176 350
- EP-A- 1 493 956
- DE-A1- 3 744 464

## Beschreibung

Die Erfindung betrifft einen Schlauch, insbesondere einen Hydraulikschlauch, aufweisend eine Innenschicht, Schichten aus vulkanisierten Kautschukmischungen und Lagen aus Geflechten.

Schläuche, die zum Fördern von Gasen oder Flüssigkeiten unter sehr hohen Drücken dienen, weisen in der Regel Schichten aus gas- und flüssigkeitsdichtem Elastomer (vulkanisierte Kautschukmischungen) auf und sind mit Verstärkungslagen aus textilen oder metallischen Materialien verstärkt. So ist z. B. aus der DE 38 40 584 A1 ein Druckschlauch bekannt, der einen elastomeren Innenschlauch, eine den Innenschlauch umgebende erste Geflechtslage, eine elastomere Zwischenlage, eine zweite Geflechtslage und einen Außenmantel aus Gummi aufweist. Auch Schläuche mit einer Polyamidinnenschicht sind bekannt, wobei solche Schläuche mit konventioneller Bauart mit einer Geflechtslage und einer Außenschicht lediglich für Dauertemperaturen bis 100 °C geeignet sind.

In der US 6,037,025 ist ein wärme- und ölbeständiger Servolenkungsschlauch beschrieben, der eine innere Innenschicht aus hydriertem Nitrilkautschuk, eine äußere Innenschicht aus einem Dienkautschuk, eine auf der Innenschicht aufgebaute Nylongeflechtslage und eine Außenschicht aus einem synthetischen Kautschuk aufweist.

In der DE 100 16 120 A1 sind Schläuche mit hoher Hitzebeständigkeit, ausreichendem Modul und Beständigkeit gegenüber Druckverformung offenbart, die ein inneres Rohr aus hydriertem Nitrilkautschuk, eine Verstärkungsschicht aus vermessingten Stahldrähten und eine äußere Umhüllung aus Ethylen-Acrylester-Copolymerkautschuk aufweisen.

Um einen Schlauch, insbesondere einen Hydraulikschlauch, zu erhalten, der für die Verwendung im Höchstdruckbereich geeignet und bei hohen Temperaturen dauerhaft dynamisch belastbar ist, wird in der EP 1 493 956 A1 vorgeschlagen, dass der Schlauch eine hochtemperaturbeständige Innenschicht aus einer vernetzten Kautschukmischung, eine Textilgeflechtslage mit einem Abdeckungsgrad von mindestens 80%, z. B. aus aufgeflochtenem Polyamidgarn, eine Zwischenschicht aus einer vernetzten Kautschukmischung auf der Basis von hydriertem Nitrilkautschuk, die 2 bis 30 phr zumindest eines Metallsalzes der Methacryl- und/oder der Acrylsäure enthält, eine Stahldrahtgeflechtslage, wobei die Einzelstränge des Geflechts vermessingt sind, und eine hochtemperaturbeständige Außenschicht aus einer vernetzten Kautschukmischung aufweist. Die Druck- und Impulsbeständigkeit derartiger Schläuche bei hohen Temperaturen entspricht nicht in allen Fällen den gewünschten Erfordernissen. Um die Druck- und Impulsbeständigkeit zu verbessern, können mit zusätzlichem verfahrenstechnischen Aufwand und höheren Kosten weitere Stahldrahtgeflechtslagen mit Zwischenlagen zusätzlich zu der Textil- und der Stahldrahtgeflechtslage aufgebracht werden. Die Schläuche gemäß der EP 1 493 956 A1 lassen sich außerdem nur mit erhöhtem Aufwand armieren, da die Geflechtslagen auf eine hochtemperaturbeständige Kautschukinnenschicht aufgebracht werden müssen und die Kautschukmischungen solcher Innenschicht bei der Armierung mit dem Geflecht die starke Tendenz zum Fließen zeigen. Wird nicht entsprechend vorsichtig und aufwändig armiert, kann der fließende Kautschuk zu Störstellen im Produkt führen.

Bekannt sind auch Schläuche allein aus Polyamid mit einer Armierungslage. Derartige Schläuche sind allerdings sehr hart und steif und keinesfalls für Temperaturen über 100 °C geeignet.

Der vorliegenden Erfindung liegt die Aufgabe zu Grunde, einen Schlauch, insbesondere einen Hydraulikschlauch, für die Verwendung im Höchstdruckbereich bereitzustellen, der hinsichtlich seiner dauerhaften dynamischen Belastbarkeit bei Temperaturen über 100 °C verbessert ist und ohne vermehrten verfahrenstechnischen Aufwand hergestellt werden kann.

Gelöst wird diese Aufgabe erfindungsgemäß durch einen Schlauch, der von innen nach außen zumindest
- eine Innenschicht aus Polyamid,
- eine erste Zwischenschicht aus einer vernetzten Kautschukmischung,
- eine erste Stahldrahtgeflechtslage, wobei die Einzelstränge des Geflechts vermessingt sind,
- eine zweite Zwischenschicht aus einer vernetzten Kautschukmischung,
- eine zweite Stahldrahtgeflechtslage, wobei die Einzelstränge des Geflechts vermessingt sind,
- und eine hochtemperaturbeständige Außenschicht aus einer vernetzten Kautschukmischung aufweist.

Nur durch den speziellen Schlauchaufbau aus den Schichten aus vulkanisierten Kautschukmischungen und den Stahldrahtgeflechtslagen in Kombination mit einer Polyamidinnenschicht ist es gelungen, einen Schlauch bereitzustellen, der trotz chemikalienbeständiger Polyamidinnenschicht dauerhaften dynamischen Belastungen bei Temperaturen über 100 °C standhält.

Durch den Einsatz einer kompakten Innenschicht aus Polyamid wird zum einen verhindert, dass die Innenschicht, wie es bei einer Kautschukmischung der Fall wäre, bei Druckimpulsbeanspruchung durch die erste Stahldrahtgeflechtslage durchschlägt oder durchgedrückt wird, zum anderen ist eine extrudierte Polyamidinnenschicht deutlich preisgünstiger als eine hochtemperatur- und chemikalienbeständige Kautschukmischung beispielsweise auf der Basis von hydriertem Nitrilkautschuk. Gleichzeitig bewirkt die Anwesenheit von zwei Stahldrahtgeflechtslagen, dass der Schlauch besonders hohen Druck- und Impulsbelastungen, insbesondere dauernden hohen Druckwechseln, standhält und eine hohe Haltbarkeit aufweist.

Der Schlauch ist verfahrenstechnisch einfach und kostengünstig herstellbar, indem zunächst eine Polyamidinnenschicht extrudiert wird. Diese etwas steifere Thermoplastschicht bewirkt, dass sich der Schlauchrohling gut und ohne größeren verfahrenstechnischen Aufwand und ohne hohe Kosten armieren lässt. Auf die Polyamidinnenschicht wird eine Zwischenschicht aus einer vernetzten Kautschukmischung extrudiert, die die Funktionen einer Einbettungsmischung für die Stahldrahtgeflechtslage und einer Haftmischung zur Polyamidinnenschicht übernimmt. Darauf wird eine Stahldrahtlage geflochten. Dann wird eine Zwischenschicht aus einer Kautschukmischung extrudiert oder in Form einer Platte aufgebracht. Im Anschluss wird eine weitere Stahldrahtlage aufgeflochten und schließlich eine Außenschicht aus einer Kautschuk-mischung extrudiert. Der Schlauchrohling kann auf herkömmliche Weise vulkanisiert werden.

Die erfindungsgemäßen Schläuche zeichnen sich durch eine sehr gute Beständigkeit gegen additivhaltige Öle, Hydraulikflüssigkeiten und Bremsflüssigkeiten aus.

Durch die Verwendung der Innenschicht aus Polyamid kann auf eine dicht aufgeflochtene , im Material und in der Herstellung teure Textilgeflechtslage, die das Durchschlagen von einer innenliegenden Kautschukmischungsschicht verhindern würde, verzichtet werden.

Die Innenschicht aus Polyamid weist bevorzugt eine Dicke von 0,5 bis 1,2 mm auf, um zum einen eine ausreichende Dicke zur Verhinderung des Durchschlags durch die Geflechtsschicht bereitzustellen und um zum anderen die Steifigkeit des Schlauches nicht zu stark zu erhöhen und eine Armierbarkeit bei hohen Temperaturen durch das Aufschmelzen der Polyamidschicht nicht negativ zu beeinflussen.

Bei dem Polyamid für die Innenschicht kann es sich um unterschiedliche Polyamidtypen aus unterschiedlichen unverzweigten aliphatischen Bausteinen handeln. So kann z. B. Polyamid 12 (Codierung der Polyamide aus unverzweigten aliphatischen Bausteinen nach der Anzahl der C-Atome im Baustein) eingesetzt werden. Im Hinblick auf eine gute Hochtemperaturbeständigkeit und gute Verarbeitbarkeit hat sich der Einsatz von Polyundecanamid (PA 11) als vorteilhaft erwiesen.

Die auf der Innenlage aufgebaute erste Zwischenschicht dient als Haftmischung zur Polyamidinnenschicht und als Einbettungsmischung für die Stahldrahtgeflechtslage. Vorzugsweise ist diese Zwischenschicht aus einer vernetzten Kautschukmischung auf der Basis von Chloroprenkautschuk gebildet, auf welche das Stahldrahtgeflecht einfach aufgeflochten werden kann und welche eine besonders gute Einbettung der Stahldrähte und damit guten Schutz vor Feuchtigkeit und Korrosion bietet. Die Mischung für die erste Zwischenschicht kann neben dem Chloroprenkautschuk noch andere Kautschuke in Mengen bis zu 20 phr enthalten.

Gemäß einer vorteilhaften Weiterbildung der Erfindung ist die zweite Zwischenschicht, die zwischen den beiden Stahldrahtgeflechtslagen angeordnet ist, aus einer vernetzten Kautschukmischung auf der Basis von hydriertem Nitrilkautschuk (HNBR), die 2 bis 30 phr zumindest eines Metallsalzes der Methacryl- und/oder Acrylsäure enthält, gebildet. Diese Kautschukmischung ermöglicht eine chemische Anbindung an die vermessingten Einzelstränge des Stahldrahtgeflechts, so dass die Schicht fester an den Stahl gebunden ist und dynamischen Dauerbelastungen bei hohen Temperaturen widersteht. Die Mischung federt außerdem bei Impulsdruck besser ab als Kautschukmischungen, die auf anderen Kautschuken basieren. Ferner zeichnet sich die Mischung durch eine hohe Temperaturbeständigkeit aus.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. In der Kautschukmischung addieren sich die phr-Anteile der verschiedenen Kautschuke zu 100.

Die Außenschicht des Schlauches kann aus vernetzten Kautschukmischungen auf der Basis von verschiedenen Kautschuken (auch Verschnitte verschiedener Kautschuke) gebildet sein. Als vorteilhaft hat es sich aber erwiesen, wenn die Außenschicht aus einer vernetzten Kautschukmischung auf der Basis von chlorsulfoniertem Polyethylen (CSM) gebildet ist. Diese Mischung verbindet sich äußerst fest mit dem vermessingten Stahldraht und die Vulkanisate zeichnen sich durch eine hohe Temperaturbeständigkeit aus. Es kommt nicht zu Rissen in der Außenschicht, die eine Feuchtigkeitswanderung bis an die Stahldrahtgeflechtslage mit auftretender Korrosion ermöglichen würden. Bei Trennversuchen zwischen Stahldraht und vernetzter Kautschukmischung auf der Basis von chlorsulfoniertem Polyethylen kommt es außerdem zum Kohäsionsbruch innerhalb des Gummis und nicht zum gefürchteten Adhäsionsbruch zwischen Stahl und Gummi. Der Stahldraht bleibt immer vom Gummi umhüllt und ist so vor Feuchtigkeit geschützt.

Durch den speziellen Schlauchaufbau aus einer Innenschicht aus Polyamid, einer ersten Zwischenschicht auf der Basis von Chloroprenkautschuk, zwei Stahldrahtgeflechtslagen, die durch eine Zwischenschicht aus einer vernetzten Kautschukmischung auf der Basis von hydriertem Nitrilkautschuk (HNBR), die 2 bis 30 phr zumindest eines Metallsalzes der Methacryl- und/oder Acrylsäure enthält, getrennt sind, und einer hochtemperaturbeständigen Außenschicht aus einer vernetzten Kautschukmischung auf der Basis von chlorsulfoniertem Polyethylen (CSM) ist es gelungen, einen Schlauch mit einer Polyamidinnenschicht bereitzustellen, der Dauertemperaturen bis 120 °C bei besonders hoher Druck- und Impulsbelastung widersteht und eine ausgesprochen lange Haltbarkeit aufweist.

Alternativ zu einer Außenschicht auf der Basis von chlorsulfoniertem Polyethylen kann die Außenschicht auch aus einer vernetzten Kautschukmischung auf der Basis von hydriertem Nitrilkautschuk, die 2 bis 30 phr zumindest eines Metallsalzes der Methacryl- und/oder der Acrylsäure enthält, gebildet sein, wodurch ebenfalls eine hohe Chemikalien- und Temperaturbeständigkeit des Schlauches erzielt werden kann. Wird für die zweite Zwischenschicht ebenfalls eine Mischung auf der Basis von hydriertem Nitrilkautschuk eingesetzt, werden für die Zwischenschicht und Außenschicht Kautschukmischungen auf gleicher Basis verwendet, so dass Unverträglichkeiten zwischen den Schichten vermieden werden und eine gute Haftung gewährleistet ist.

Um die Temperaturbeständigkeit des Schlauches und die Verträglichkeiten der Schichten weiter zu verbessern, hat es sich als vorteilhaft erwiesen, wenn die Kautschukmischungen der zweiten Zwischenschicht und der Außenschicht peroxidisch vernetzt sind. Als peroxidische Vernetzungschemikalien können dabei alle dem Fachmann für die radikalische Vernetzung bekannten organischen Peroxide, z. B. 2,5-Dimethyl, 2,5-di-t-butylperoxyhexan oder Dicumylperoxid, die in der Regel mit geeigneten Coaktivatoren, z. B. Triallylisocyanurat, eingesetzt werden, verwendet werden.

Wird im Schlauch eine Kautschukmischung auf der Basis von hydriertem Nitrilkautschuk, die 2 bis 30 phr zumindest eines Metallsalzes der Methacryl- und/oder Acrylsäure enthält, verwendet, hat es sich als vorteilhaft erwiesen, wenn als Metallsalz der Acrylsäure Zinkdiacrylat eingesetzt wird. Es hat sich herausgestellt, dass man mit diesem Salz in der zweiten Zwischen- und ggf. Außenschicht eine besonders gute Anbindung an die Einzelstränge der Stahldrahtgeflechtslage erzielen kann. Das Metallsalz der Methacryl- und/oder der Acrylsäure kann der Mischung als reine Substanz zugemischt werden. Es ist aber auch möglich, dass das Metallsalz bereits mit einem hydrierten Nitrilkautschuk als so genannter Masterbatch vorgemischt ist, welcher für die Mischung dann mit weiterem Kautschuk und weiteren Mischungsbestandteilen vermengt wird.

Die Kautschukmischungen für die Zwischen- und Außenschicht des Schlauches können neben den bereits genannten Substanzen weitere in der Kautschukindustrie übliche Zusatzstoffe, wie z. B. Füllstoffe (z. B. Ruß, Kieselsäure), Alterungsschutzmittel, Weichmacher und Verarbeitungshilfsmittel enthalten.

Gemäß einer vorteilhaften Weiterbildung der Erfindung besteht die Stahldrahtgeflechtslage, die auf die Zwischenschicht aufgebracht wird, aus vermessingtem Federstahldraht, der eine hohe dynamische Festigkeit des Schlauches bewirkt. Der Draht kann dabei Durchmesser von 0,2 bis 0,4 mm und Zugfestigkeiten von 1800 bis 3500 N/mm² aufweisen.

Der erfindungsgemäße Schlauch kann nach herkömmlichen Verfahren hergestellt werden. So kann z. B. auf die auf einen Dom extrudierte Innenschicht und die darauf aufextrudierte erste Zwischenschicht die erste Stahlgeflechtslage aufgeflochten werden. Danach wird dann die zweite Zwischenschicht aufextrudiert oder in Form einer Platte aufgebracht. Anschließend wird das zweite Stahlgeflecht aufgeflochten und auf dieses die Außenschicht extrudiert. Schließlich wird der Schlauch vulkanisiert.

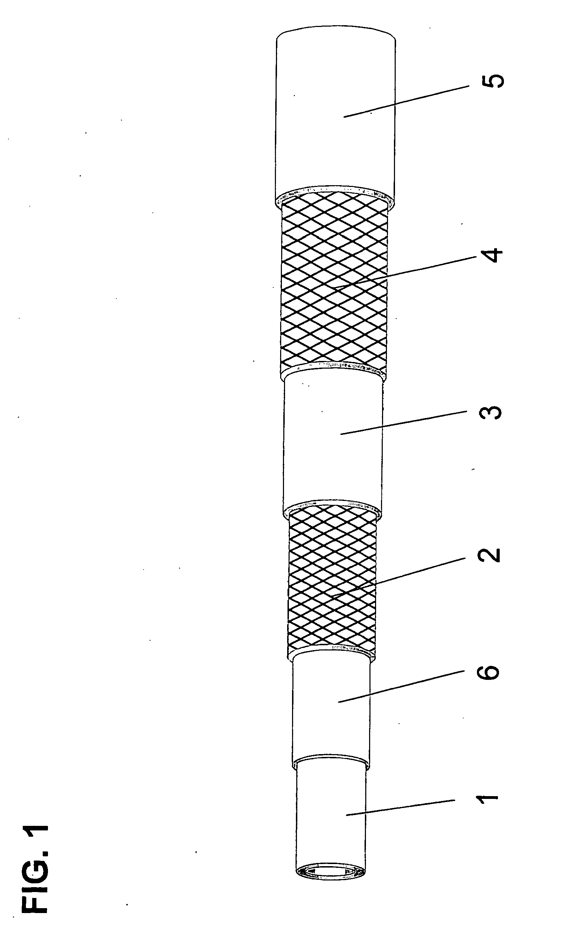

Die Erfindung wird nun anhand der Zeichnung, die ein Ausführungsbeispiel darstellt, näher erläutert. Dabei zeigt die einzige Zeichnungsfigur schematisch einen erfindungsgemäßen Schlauch in abgestuft aufgeschnittener Seitenansicht.

Der Schlauch in der Figur weist eine hochtemperaturbeständige Innenschicht 1 aus Polyamid (PA 11), eine erste Zwischenschicht 6 aus einer vernetzten Kautschukmischung auf der Basis von Chloroprenkautschuk, eine darauf aufgebrachte erste Stahldrahtgeflechtslage 2 aus vermessingten Federstahldrähten, eine zweite Zwischenschicht 3 aus einer vernetzten Kautschukmischung auf der Basis von hydriertem Nitrilkautschuk, die 2 bis 30 phr eines Metallsalzes der Methacryl- und/oder Acrylsäure enthält, eine zweite Stahldrahtgeflechtslage 4 aus vermessingten Federstahldrähten und eine hochtemperaturbeständige Außenschicht 5 aus einer vernetzten Kautschukmischung auf der Basis von chlorsulfoniertem Polyethylen (CSM) auf.

In der Tabelle 1 ist ein Beispiel einer Mischung für die erste Zwischenschicht 6, in der Tabelle 2 ist ein Beispiel einer Mischung für die zweite Zwischenschicht 3 und in der Tabelle 3 ein Beispiel einer Mischung für die Außenschicht 5 des erfindungsgemäßen Schlauches angegeben.

**Tabelle 1**

| **Mischungsbestandteil** | **Menge in phr** |
|---|---|
| Chloroprenkautschuk | 90 |
| Polybutadien | 10 |
| Kreide | 30 |
| Ruß N550 | 30 |
| Kieselsäure | 20 |
| Magnesiumoxid | 4 |
| Verarbeitungshilfsmittel | 3 |
| Weichmacher | 8 |
| Stearinsäure | 1 |
| Zinkoxid | 5 |
| Beschleuniger | 0,4 |
| Schwefel | 2 |

**Tabelle 2**

| **Mischungsbestandteil** | **Menge in phr** |
|---|---|
| Hydrierter Nitrilkautschuk* | 100 |
| Zinkdiacrylat | 7,8 |
| Ruß N550 | 50 |
| Magnesiumoxid | 2 |
| Alterungsschutzmittel | 1 |
| Weichmacher | 5 |
| Triallylisocyanurat | 2 |
| Peroxid auf Inertmaterial** | 7,5 |

| | |
|---|---|
| * Restdoppelbindungsgehalt < 2 %, Acrylnitrilgehalt: 34 Gew.-% bezogen auf Polymer ** Bis-(tert.-butyl-peroxy-isopropyl)-benzol, Peroxidgehalt 40 % | |

**Tabelle 3**

| **Mischungsbestandteil** | **Menge in phr** |
|---|---|
| chlorsulfoniertes Polyethylen* | 100 |
| Ruß N550 | 40 |
| Kreide | 40 |
| Magnesiumoxid | 5 |
| Calciumhydroxid | 10 |
| Weichmacher | 15 |
| Alterungs- und Ozonschutzmittel | 6 |
| Triallylcyanurat** | 4 |
| Peroxid auf Inertmaterial*** | 6 |

| | |
|---|---|
| * 36 Gew.-% Chlorgehalt, 1 Gew.-% Schwefelgehalt ** Triallylcyanurat auf inertem Träger, Triallylcyanuratgehalt 70 % *** Bis-(tert.-butyl-peroxy-isopropyl)-benzol, Peroxidgehalt 40 % | |

Ein Schlauch mit einer Mischung gemäß Tabelle 1 für die erste Zwischenschicht, mit einer Mischung gemäß Tabelle 2 für die zweite Zwischenschicht und mit einer Mischung gemäß Tabelle 3 für die Außenschicht zeichnet sich durch eine dauerhafte dynamische Belastbarkeit im Höchstdruckbereich bei hohen Temperaturen aus und kann z. B. als Hydraulikschlauch verwendet werden.

Ein Schlauch A mit einer Innenschicht aus PA 11, einer ersten Zwischenschicht aus einer Mischung gemäß Tabelle 1, einer zweiten Zwischenschicht gemäß Tabelle 2 und einer Außenschicht aus einer Mischung gemäß Tabelle 3 und zwei Stahldrahtgeflechtslagen aus vermessingtem Stahlfederdraht mit einer Zugfestigkeit von 2450 ± 150 N/mm² wurde hinsichtlich seiner dynamischen Belastbarkeit mit einen Schlauch B gemäß der EP 1 493 956 A1 verglichen, der eine Innen-, Zwischen- und Außenschicht aus einer Mischung gemäß Tabelle 2, einer Stahldrahtgeflechtslage aus vermessingtem

Stahlfederdraht mit einer Zugefestigkeit von 2450 ± 150 N/mm² und einer zwischen Innen- und Zwischenschicht angeordneten Textilgeflechtslage aus Polyamid-6.6-garn verglichen. Beide Schläuche sind für den Hochtemperatureinsatz bei Temperaturen von über 100 °C tauglich. Schläuche aus einer NBR-Innenschicht, einer Stahltgeflechtslage und einer CR-Außenschicht, wie sie aus dem Stand der Technik bekannt sind, halten derartigen Temperaturen unter Druck-Impuls-Belastung nicht stand und fallen schon nach weniger als 200 000 Zyklen aus.

Es wurden Hydraulik-Druck-Impulsprüfungen ohne Biegung in Anlehnung an DIN EN ISO 6803 durchgeführt. Die Prüftemperatur betrug 120 °C und der Prüfdruck 250 bar bei einer Druckanstiegs- und Druckabfallzeit von 0,2 s und einer Druckhalte- und Drucknullzeit von 0,65 s. Die Prüffrequenz betrug 0,588 Hz und der Probekörper war um 180 °C gebogen. Als Prüfflüssigkeit wurde ATF Pentosin CHF verwendet. Die Zahl der Zyklen bis zum Ausfall wurde bestimmt. Außerdem wurde die Trennkraft für die Trennung Zwischenschichtgummi-Stahl bestimmt. Die Ergebnisse sind in Tabelle 4 dargestellt.

**Tabelle 4**

| **Schlauchtyp** | **Zyklen bis zum Ausfall** | **Trennkraft Zwischenschichtgummi - Stahl [N/mm]** |
|---|---|---|
| A (erfindungsgemäß) | > 1 000 000 | Keine Trennung Zwischenschichtgummi-Stahl und Außenschichtgummi-Stahl, Kohäsionsbruch innerhalb des Gummis der Schichten |
| B (gemäß EP 1 493 956 A1) | < 600 000 | Keine Trennung Zwischenschichtgummi-Stahl, Kohäsionsbruch innerhalb des Gummis der Zwischenschicht |

Aus der Tabelle 4 wird ersichtlich, dass die erfindungsgemäßen Schläuche A bei einer Temperatur von 120 °C und einem Prüfdruck von 250 bar mehr als 1 Mio. Zyklen bis zum Ausfall erreichen. Bei dem anderen Schlauch kommt es hingegen schon deutlich früher zum Ausfall. Die Gummischichten im Schlauch sind fest mit den Stahldrähten verbunden und schützen diese vor Feuchtigkeit und Korrosion.

## Patentansprüche

1. Schlauch, insbesondere Hydraulikschlauch, aufweisend von innen nach außen zumindest
- eine Innenschicht (1) aus Polyamid,
- eine erste Zwischenschicht (6) aus einer vernetzten Kautschukmischung,
- eine erste Stahldrahtgeflechtslage (2), wobei die Einzelstränge des Geflechts vermessingt sind,
- eine zweite Zwischenschicht (3) aus einer vernetzten Kautschukmischung,
- eine zweite Stahldrahtgeflechtslage (4), wobei die Einzelstränge des Geflechts vermessingt sind,
- und eine hochtemperaturbeständige-Außenschicht (5) aus einer vernetzten Kautschukmischung.

2. Schlauch nach Anspruch 1, **dadurch gekennzeichnet, dass** er keine Textilgeflechtslage aufweist.

3. Schlauch nach Anspruch 1 oder 2, **dadurch gekennzeichnet, dass** die Innenschicht (1) eine Dicke von 0,5 bis 1,2 mm aufweist.

4. Schlauch nach zumindest einem der Ansprüche 1 bis 3, **dadurch gekennzeichnet, dass** die Innenschicht (1) aus Polyundecanamid (PA 11) besteht.

5. Schlauch nach zumindest einem der Ansprüche 1 bis 4, **dadurch gekennzeichnet, dass** die erste Zwischenschicht (6) aus einer vernetzten Kautschukmischung auf der Basis von Chloroprenkautschuk gebildet ist.

6. Schlauch nach zumindest einem der Ansprüche 1 bis 5, **dadurch gekennzeichnet, dass** die zweite Zwischenschicht (3) aus einer vernetzten Kautschukmischung auf der Basis von hydriertem Nitrilkautschuk, die 2 bis 30 phr zumindest eines Metallsalzes der Methacryl- und/oder Acrylsäure enthält, gebildet ist.

7. Schlauch nach zumindest einem der Ansprüche 1 bis 6, **dadurch gekennzeichnet, dass** die Außenschicht (5) aus einer vernetzten Kautschukmischung auf der Basis von chlorsulfoniertem Polyethylen gebildet ist.

8. Schlauch nach zumindest einem der Ansprüche 1 bis 6, **dadurch gekennzeichnet, dass** die Außenschicht (5) aus einer vernetzten Kautschukmischung auf der Basis von hydriertem Nitrilkautschuk, die 2 bis 30 phr zumindest eines Metallsalzes der Methacryl- und/oder der Acrylsäure enthält, gebildet ist.

9. Schlauch nach zumindest einem der vorgehenden Ansprüche, **dadurch gekennzeichnet, dass** die zweite Zwischenschicht (3) und die Außenschicht (5) auf Kautschukmischungen basieren, die peroxidisch vernetzt sind.

10. Schlauch nach zumindest einem der vorhergehenden Ansprüche, **dadurch gekennzeichnet, dass** die Stahldrahtgeflechtslagen (2, 4) aus vermessingten Federstahldrähten bestehen.

## Claims

1. Hose, more particularly hydraulic hose, including from in to out at least
- an inner layer (1) formed of polyamide,
- a first interlayer (6) formed of a crosslinked rubber mixture,
- a first steel wire braid ply (2) wherein the individual strands of the braid are brass plated,
- a second interlayer (3) formed of a crosslinked rubber mixture,
- a second steel wire braid ply (4) wherein the individual strands of the braid are brass plated,
- and a high temperature resistant outer layer (5) formed of a crosslinked rubber mixture.

2. Hose according to Claim 1, **characterized in that** it has no textile braid ply.

3. Hose according to Claim 1 or 2, **characterized in that** the inner layer (1) has a thickness of from 0.5 to 1.2 mm.

4. Hose according to at least one of Claims 1 to 3, **characterized in that** the inner layer (1) consists of polyundecanamide (PA 11).

5. Hose according to at least one of Claims 1 to 4, **characterized in that** the first interlayer (6) is formed of a crosslinked rubber mixture based on chloroprene rubber.

6. Hose according to at least one of Claims 1 to 5, **characterized in that** the second interlayer (3) is formed of a crosslinked rubber mixture based on hydrogenated nitrile rubber and containing 2 to 30 phr of at least one metal salt of methacrylic and/or acrylic acid.

7. Hose according to at least one of Claims 1 to 6, **characterized in that** the outer layer (5) is formed of a crosslinked rubber mixture based on chlorosulphonated polyethylene.

8. Hose according to at least one of Claims 1 to 6, **characterized in that** the outer layer (5) is formed of a crosslinked rubber mixture based on hydrogenated nitrile rubber and containing 2 to 30 phr of at least one metal salt of methacrylic and/or acrylic acid.

9. Hose according to at least one of the preceding claims, **characterized in that** the second interlayer (3) and the outer layer (5) are based on rubber mixtures which are peroxidically crosslinked.

10. Hose according to at least one of the preceding claims, **characterized in that** the steel wire braid plies (2, 4) consist of brass-plated spring steel wires.

## Revendications

1. Tuyau, notamment tuyau hydraulique, comprenant de l'intérieur vers l'extérieur au moins
- une couche intérieure (1) en polyamide,
- une première couche intermédiaire (6) en un mélange de caoutchouc réticulé,
- une première couche de treillis en fils d'acier (2), les fils individuels du treillis étant laitonnés,
- une seconde couche intermédiaire (3) en un mélange de caoutchouc réticulé,
- une seconde couche de treillis en fils d'acier (4), les fils individuels du treillis étant laitonnés,
- et une couche extérieure résistante aux températures élevées (5) en un mélange de caoutchouc réticulé.

2. Tuyau selon la revendication 1, **caractérisé en ce qu'**il ne comprend pas de couche de treillis textile.

3. Tuyau selon la revendication 1 ou 2, **caractérisé en ce que** la couche intérieure (1) présente une épaisseur de 0,5 à 1,2 mm.

4. Tuyau selon au moins l'une quelconque des revendications 1 à 3, **caractérisé en ce que** la couche intérieure (1) est constituée de polyundécanamide (PA 11).

5. Tuyau selon au moins l'une quelconque des revendications 1 à 4, **caractérisé en ce que** la première couche intermédiaire (6) est formée à partir d'un mélange de caoutchouc réticulé à base de caoutchouc de chloroprène.

6. Tuyau selon au moins l'une quelconque des revendications 1 à 5, **caractérisé en ce que** la seconde couche intermédiaire (3) est formée à partir d'un mélange de caoutchouc réticulé à base de caoutchouc de nitrile hydrogéné qui contient 2 à 30 phr d'au moins un sel métallique de l'acide méthacrylique et/ou acrylique.

7. Tuyau selon au moins l'une quelconque des revendications 1 à 6, **caractérisé en ce que** la couche extérieure (5) est formée à partir d'un mélange de caoutchouc réticulé à base de polyéthylène chlorosulfoné.

8. Tuyau selon au moins l'une quelconque des revendications 1 à 6, **caractérisé en ce que** la couche extérieure (5) est formée à partir d'un mélange de caoutchouc réticulé à base de caoutchouc de nitrile hydrogéné qui contient 2 à 30 phr d'au moins un sel métallique de l'acide méthacrylique et/ou acrylique.

9. Tuyau selon au moins l'une quelconque des revendications précédentes, **caractérisé en ce que** la seconde couche intermédiaire (3) et la couche extérieure (5) sont à base de mélanges de caoutchouc qui sont réticulés peroxydiquement.

10. Tuyau selon au moins l'une quelconque des revendications précédentes, **caractérisé en ce que** les couches de treillis de fils d'acier (2, 4) sont constituées de fils d'acier à ressort laitonnés.
